# FASCICULE DE BREVET EUROPEEN

(11) **EP 4 537 039 B1**
(45) Date de publication et mention de la délivrance du brevet: **04.03.2026**
(21) Numéro de dépôt: 23731175.8
(22) Date de dépôt: 05.06.2023
(51) Int. Cl.: F28D 9/00, F28F 7/02

(54) **PROCÉDÉ DE RÉALISATION D'UN MODULE D'ÉCHANGEUR DE CHALEUR À AU MOINS UN CIRCUIT DE CIRCULATION DE FLUIDE, DE FORME GÉNÉRALE INCURVÉE; ECHANGEUR DE CHALEUR INTÉGRANT UNE PLURALITÉ DE MODULES D'ÉCHANGEURS INCURVÉS OBTENUS SELON LE PROCÉDÉ**
VERFAHREN ZUR HERSTELLUNG EINES ALLGEMEIN GEKRÜMMTEN WÄRMETAUSCHERMODULS MIT MINDESTENS EINEM FLÜSSIGKEITSKREISLAUF; WÄRMETAUSCHER MIT MEHREREN GEKRÜMMTEN WÄRMETAUSCHERMODULEN, DIE UNTER VERWENDUNG DES VERFAHRENS HERGESTELLT WURDEN
METHOD FOR PRODUCING A GENERALLY CURVED HEAT EXCHANGER MODULE HAVING AT LEAST ONE FLUID CIRCULATION CIRCUIT; HEAT EXCHANGER INCORPORATING A PLURALITY OF CURVED HEAT EXCHANGER MODULES OBTAINED USING THE METHOD

(30) Priorité: 09.06.2022 FR 2205548
(43) Date de publication de la demande: 16.04.2025
(73) Titulaire: Commissariat à l'Energie Atomique et aux Energies Alternatives, 75015 Paris (FR)
(72) Inventeur: VINCENT, Sébastien, 13115 Saint Paul lez Durance (FR); JEANNINGROS, Xavier, 13115 Saint Paul lez Durance (FR); CACHON, Lionel, 13115 Saint Paul lez Durance (FR); GIRAUD, Patrick, 13115 Saint Paul lez Durance (FR); RIGAL, Emmanuel, 38054 Grenoble Cedex 09 (FR)
(74) Mandataire: Ipsilon
(86) Numéro de dépôt international: PCT/EP2023/064946
(87) Numéro de publication internationale: WO 2023/237473

(56) Documents cités:
- DE-A1- 102009 048 459
- US-A- 2 875 986
- US-A1- 2007 023 174

## Description

### Domaine technique

La présente invention concerne les modules échangeurs de chaleur à au moins un circuit de fluide, de préférence à au moins deux circuits de fluides, comportant au moins un conduit. L'invention a trait plus particulièrement à un nouveau procédé de fabrication de tels modules d'échangeurs pour leur conférer une forme générale incurvée.

Un module d'échangeur de chaleur à plaques incurvées est connu du document US 2007/023174 A1.

Les échangeurs de chaleur connus comprennent soit un, soit au moins deux circuits à canaux de circulation interne de fluide. Dans les échangeurs à un seul circuit, les échanges thermiques se réalisent entre le circuit et un fluide environnant dans lequel il baigne ou un élément auquel il faut apporter ou extraire de la chaleur comme par exemple dans les moules. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant 1a chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins un circuit de fluide », il faut comprendre dans le cadre de l'invention, aussi bien un échangeur de chaleur à fonction uniquement d'échanges thermiques, qu'un échangeur-réacteur.

Un module d'échangeur de chaleur selon l'invention peut aussi être mis en œuvre dans toute autre application nécessitant un échange entre deux fluides, tels qu'un liquide et un gaz, ou deux liquides ou encore deux gaz, en particulier lorsque des variations de température rapides et/ ou de grande amplitude sont en jeu.

Par « fluide primaire », on entend dans le cadre de l'invention, le sens usuel en thermique, à savoir le fluide chaud qui transfère sa chaleur au fluide secondaire qui est le fluide froid.

A contrario, par « fluide secondaire », on entend dans le cadre de l'invention le sens usuel en thermique, à savoir le fluide froid auquel est transféré la chaleur du fluide primaire.

Bien que décrite en référence à une application privilégié d'échangeur de chaleur d'un réacteur nucléaire de type SMR (« Small Modular Reactor » en terminologie anglo-saxonne), l'invention peut être mise en œuvre dans toutes les applications nécessitant des échangeurs de chaleur, notamment à intégrer dans une cuve de forme cylindrique.

Parmi ces applications, on peut citer les électrolyseurs fonctionnant à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) à oxydes solides (SOEC, acronyme anglais pour « Solid Oxide Electrolyser Cell »), les échangeurs de l'industrie chimique et pétrochimique, les générateurs de vapeur, et les réacteurs nucléaires de type SMR intégré.

### Technique antérieure

Les échangeurs de chaleur, dits à plaques, existants présentent des avantages importants par rapports aux échangeurs de chaleur, dits à tubes, existants, en particulier leurs performances thermiques et leur compacité grâce à un rapport de la surface sur le volume d'échange thermiques favorablement élevé.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité.

Les échangeurs à plaques connus sont plus compacts et sont obtenus par empilement de plaques comportant des canaux et assemblées entre elles.

De la même façon, les réacteurs-échangeurs, dits à plaques, ont comme avantage une forte compacité et des capacités élevées de refroidissement et donc de maitrise thermique, lors des réactions chimiques. Ces dernières sont en effet souvent exothermiques, et il est nécessaire de limiter la montée en température dans les canaux réactifs, i.e. où se produit la réaction chimique, afin de maîtriser la réaction d'un point de vue thermique et chimique, et également de limiter le vieillissement thermique des catalyseurs parfois présents dans les canaux réactifs.

Dans tous les cas, les canaux sont généralement réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement appelé gravage chimique ou électrochimique. L'assemblage des plaques entre elles a pour objectif d'assurer l'étanchéité et/ou la tenue mécanique des échangeurs, notamment la tenue à la pression des fluides circulant à l'intérieur. L'assemblage concerne généralement un empilement réalisé en superposant, selon une séquence régulièrement répétée, des plaques de plusieurs types, chaque type correspondant à un des circuits de fluides, l'empilement pouvant contenir des plaques de séparation non rainurées.

Plusieurs techniques d'assemblage sont connues et sont mises en œuvre en fonction du type d'échangeur à plaques souhaité.

L'assemblage des plaques peut être obtenu par des moyens mécaniques, tels que des tirants maintenant l'empilement serré entre deux plaques épaisses et rigides disposées aux extrémités. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides.

L'assemblage peut encore être obtenu par brasage, en particulier pour des échangeurs pour lesquels des ailettes sont ajoutées.

L'assemblage peut enfin être obtenu par soudage par diffusion (soudage-diffusion).

Les deux dernières techniques citées permettent de réaliser des échangeurs particulièrement performants en termes de tenue mécanique. En effet, grâce à ces deux techniques, l'assemblage est obtenu non seulement à la périphérie des plaques mais aussi à l'intérieur de l'échangeur.

Les échangeurs de chaleur à plaques assemblés par soudage par diffusion présentent des joints encore plus performants mécaniquement que les joints des échangeurs obtenus par brasage du fait de l'absence du métal d'apport requis pour le brasage.

Le soudage-diffusion consiste à obtenir un assemblage à l'état solide en appliquant une force à chaud sur les pièces à assembler pendant un temps donné. La force appliquée a une fonction double : elle permet l'accostage, c'est-à-dire la mise en contact des surfaces à souder, et facilite l'élimination par fluage-diffusion de la porosité résiduelle dans les joints (interfaces). La force peut être appliquée par compression uniaxiale, par exemple à l'aide d'une presse équipée d'un four ou simplement à l'aide de masses disposées au sommet de l'empilement des pièces à assembler. Ce procédé est communément appelé soudage-diffusion uniaxial et il est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uniaxial est qu'il est plus largement répandu à l'échelle industrielle. En effet, la CIC est aussi utilisée pour le traitement par lots de pièces de fonderie ainsi que pour la compaction de poudres.

D'autres procédés de fabrication peuvent également être envisagés pour la réalisation d'échangeurs de chaleur, comme la fabrication additive, voire une combinaison de plusieurs procédés comme l'assemblage selon une des techniques précitées d'éléments réalisés en fabrication additive.

Il a déjà été décrit dans la littérature la réalisation d'échangeurs de chaleur comportant des modules d'échangeurs compacts à plaques agencés dans une calandre sous pression.

Dans le domaine nucléaire, et plus particulièrement dans le domaine des échangeurs à métal liquide, présents par exemple dans les réacteurs nucléaires de quatrième génération, il se pose des problématiques de compacité d'échangeur et de puissance thermique unitaire élevée.

En outre, il s'avère nécessaire de trouver un échangeur de chaleur entre un métal liquide, tel que le sodium liquide, et un gaz, avec la nécessité de pouvoir effectuer une vidange gravitaire du circuit de métal liquide et donc une élimination des zones de rétention dans ce circuit. Dans ce cadre de l'application susmentionnée pour un prototype de réacteur nucléaire à neutron rapides refroidis au sodium liquide, il a déjà proposé dans le brevet EP3039373B1 une solution de conception d'échangeur de chaleur entre du sodium liquide et un gaz qui met en œuvre des modules d'échangeurs compacts à plaques au sein d'une enceinte étanche.

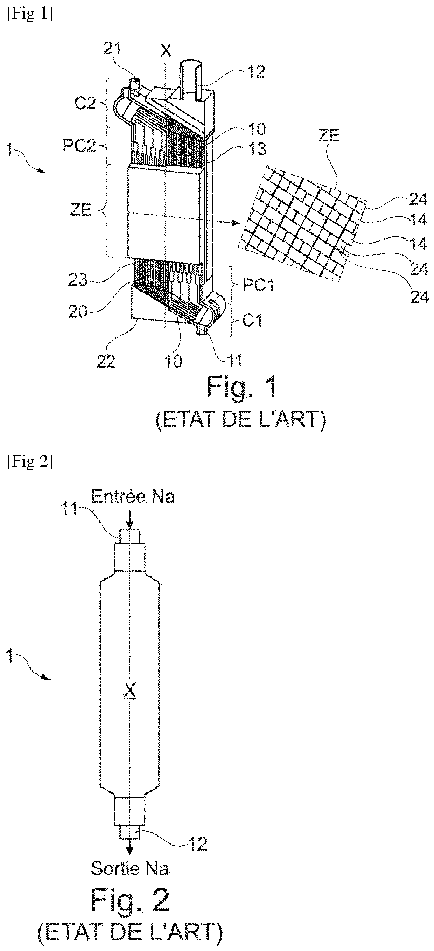

On a représenté aux figures 1 à 3, un module d'échangeur 1 à plaques compact qui a été envisagé dans le cadre d'une application d'échange de chaleur entre du sodium liquide, de la boucle secondaire et de l'azote en tant que gaz sous une pression pouvant être de l'ordre de 180 bar de la boucle tertiaire d'un réacteur à neutrons rapides refroidi avec le métal liquide, tel que le sodium liquide, dit RNR-Na ou SFR (acronyme anglais de « Sodium Fast Reactor »), ou de façon générale dit LMBFR (acronyme anglais de « Liquid Metal Breeder Fast Reactor »).

Ce module 1 d'échangeur de chaleur est donc à deux circuits de fluides, qui est mis en œuvre à titre d'exemple pour un échange entre du sodium liquide(Na) et de l'azote (N2).

Un tel module 1 est constitué d'un empilement alterné de plaques métalliques 10, 20 assemblées entre elles par soudage-diffusion de préférence selon une technique de CIC.

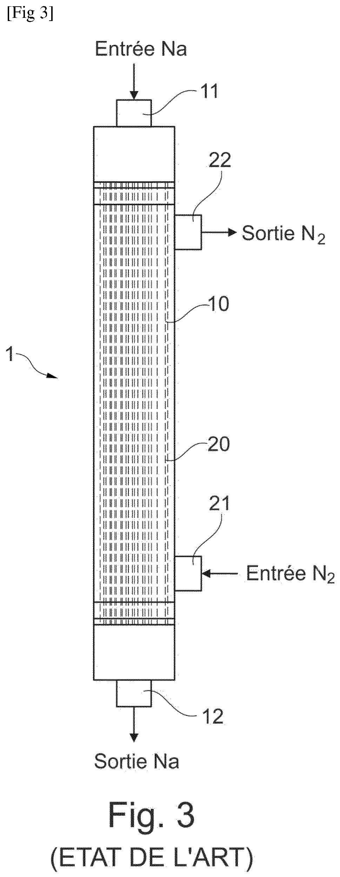

Le module 1 intègre deux collecteurs 11, 12 respectivement d'entrée et de sortie du sodium liquide (Na). Dans la configuration des figures 2 et 3, le module 1 s'étend selon un axe central (X) et le collecteur d'entrée 11 est agencé sur le dessus du module selon l'axe X et le collecteur de sortie 12 est agencé également selon l'axe X du module mais sur le dessous. Dans la configuration de la figure 1, les collecteurs 11, 12 sont décalés par rapport à l'axe central (X).

Chacun des collecteurs 11, 12 débouche sur une embase latérale de l'empilement de plaques sur laquelle les canaux du circuit de Na débouchent mais pas ceux du circuit de N2.

Le module 1 comprend également deux collecteurs 21, 22, respectivement d'entrée et de sortie d'azote (N2). Dans la configuration des figures 2 et 3, ces collecteurs 21, 22 sont agencés sur une même face longitudinale, respectivement en bas du module, et en haut du module. Comme détaillé par la suite, chacun des collecteurs d'entrée 21 et de sortie 22 traverse l'empilement transversalement à l'axe (X) et débouche sur les canaux du circuit de N2 mais pas sur ceux du circuit de Na. Dans la configuration de la figure 1, les collecteurs 21, 22 sont également décalés par rapport à l'axe central (X).

Dans un tel module 1, la circulation des fluides (Na, N2) est préférentiellement à contre-courant.

Chaque plaque métallique 10, 20 est au préalable rainurée avec des rainures 13, 23 qui vont délimiter les canaux 14 dans lesquels le sodium liquide est destiné à circuler et les canaux 24 dans lesquels l'azote est destiné à circuler. La circulation au sein de ces canaux 14, 24 se fait depuis l'un ou l'autre d'un raccordement 11, 21 du collecteur d'entrée C1, C2 jusqu'à la zone d'échange thermique ZE en passant par un pré-collecteur PC1, PC2 puis par une évacuation par l'un ou l'autre des collecteurs de sortie 12, 22.

Le pré-collecteur PC1, PC2 permet de corriger au besoin la distribution de débit dans les canaux d'échange 14, 24 en équilibrant les pressions.

Les inventeurs de la présente invention ont été confrontés à une problématique d'optimisation de l'encombrement des échangeurs compacts dans l'enceinte principale de forme cylindrique d'un réacteur intégré de type SMR, de façon à diminuer autant que possible la taille du réacteur pour des enjeux de coût d'investissement et de compétitivité. Ils ont analysé que l'optimisation de l'encombrement passe par la réduction du nombre de composants dédiés à l'échangeur et de leurs dimensions, afin d'obtenir un diamètre de l'enceinte principale d'un réacteur intégré le plus petit possible et d'optimiser les tuyauteries de raccordement (quantité et nombre de traversées de cette cuve).

De manière plus précise, le cahier des charges d'un échangeur auquel ont été confrontés les inventeurs peut être résumé en substance comme suit :
adapter au mieux les échangeurs aux contraintes dimensionnelles, généralement celles d'une enceinte sous pression dans laquelle ils sont destinés à être agencés. Dans ce cas d'application pour un réacteur SMR calogène, les modules d'un échangeur doivent être agencés dans une couronne cylindrique délimité par deux cuves concentriques dont les dimensions sont imposées par la cheminée de passage vers le cœur du réacteur et l'enceinte primaire. Un tel échangeur doit également répondre aux objectifs de puissance compatible avec les débits et pressions dans les circuits ;
assurer la tenue mécanique sous pression et en température aussi bien en régime permanent qu'en régime transitoire de fonctionnement ;
garantir une distribution de débit homogène entre les canaux d'échange thermique tout en maitrisant l'ajout de perte de charge ;
présenter une faible inertie thermique pour limiter l'amplitude des contraintes thermiques lors de régimes transitoires rapides.

Les modules d'échangeurs compacts tels que ceux présentés en référence aux figures 1 à 3, de forme parallélépipédique droite dans leur partie utile facilitent leur dimensionnement et leur fabrication. Mais, dans le cas d'une intégration dans une enceinte étanche cylindrique qui doit être dimensionnée en pression, comme dans le cas d'un réacteur de type SMR intégré, cette géométrie n'est pas la plus optimale.

Il existe donc un besoin d'améliorer encore les modules d'échangeurs de chaleur à au moins deux circuits de fluide, notamment afin d'optimiser leur géométrie et répondre au mieux au cahier des charges précités.

Le but de l'invention est de répondre au moins partiellement à ce besoin.

### Exposé de l'invention

Pour ce faire, l'invention a pour objet un procédé de réalisation d'un module d'échangeur de chaleur à au moins deux circuits de fluide comportant chacun des canaux, comportant les étapes suivantes :
a/ réalisation d'un ou plusieurs éléments d'un des deux circuits de fluide, dit premier circuit, et réalisation d'un ou plusieurs éléments d'au moins un autre circuit de fluide, dit deuxième circuit, chaque élément du premier circuit comportant au moins une plaque métallique comportant des premières rainures formant au moins une partie des canaux du premier circuit, chaque élément du deuxième circuit comportant au moins une plaque métallique comportant des deuxièmes rainures formant au moins une partie des canaux du deuxième circuit ;
b/ réalisation d'une ou plusieurs nappes intégrant chacune au moins une partie des canaux du premier circuit et/ou du deuxième circuit, soit par assemblage d'éléments de l'un et/ou l'autre des deux circuits de fluide réalisés selon l'étape a/ et empilés les uns sur les autres, soit par une technique autre que l'assemblage ;
c/ cintrage initial des plaques métalliques des éléments des premier et deuxième circuits sans leurs rainures et/ou lors la réalisation de leurs rainures et/ou une fois leurs rainures réalisées, et/ou de la(des) nappe(s) réalisée(s) selon l'étape b/ le cas échéant empilées entre elles ;
d/ empilement des nappes intégrant chacune au moins une partie des canaux du premier circuit et/ou du deuxième circuit et cintrées initialement; l'empilement intégrant le cas échéant des plaques métalliques pleines, incurvées ou non ;
e/ mise en place de l'empilement de l'étape d/ au sein d'un outillage d'assemblage formant en outre un calibre de courbure, destiné à réaliser un cintrage final ;
f/ assemblage par pressage à chaud de l'empilement au sein de l'outillage selon l'étape e/ de sorte à obtenir l'assemblage définitif avec cintrage final du module d'échangeur de chaleur.

Selon une variante de réalisation avantageuse, la technique autre que l'assemblage selon l'étape b/ est une technique de fabrication additive, de préférence choisie parmi la fusion sur lit de poudre métallique au moyen d'un laser ou le dépôt de fil métallique fondu.

Avantageusement, l'étape b/ et/ou l'étape f/ d'assemblage est réalisée soit par soudage-diffusion, soit par brasage, soit par brasage-diffusion.

Selon un mode de réalisation avantageux, l'étape f/ d'assemblage est réalisée par application d'un cycle de compression isostatique à chaud (CIC) à haute pression aux nappes et/ou à l'empilement, les canaux à la fois du premier circuit et du deuxième circuit étant ouverts vers l'extérieur.

Selon ce mode, le cycle de CIC selon l'étape f/ est de préférence réalisé à une température comprise entre 850°C et 1200°C, de préférence entre 1050°C et 1150°C, une pression comprise entre 500 et 1500 bar avec une montée en température d'une durée comprise entre 1h et 4h et un maintien en température d'une durée de 1h à 6h.

Toujours selon ce mode, on réalise au préalable de l'étape f/ de CIC, l'étape e/ avec un ajout d'au moins une plaque métallique pleine de part et d'autre de l'empilement pour former un pré-module, l'insertion du pré-module dans un outillage à deux blocs de forme concave et convexe complémentaires dont le rayon de courbure correspond à celui du cintrage final, insertion du pré-module pris entre les deux blocs d'outillage dans un conteneur de forme parallélépipédique en tôle pliée et soudée, puis une étape de mise sous vide de l'intérieur du conteneur.

Selon un autre mode de réalisation avantageux, le procédé comprend une étape g/ de soudage de tubes de collecteurs de fluide sur le module assemblé selon l'étape f/, un collecteur de fluide étant apte à distribuer ou récupérer un fluide circulant dans le premier ou le deuxième circuit.

L'invention a également pour objet un module d'échangeur de chaleur à au moins deux circuits de fluides, notamment obtenu selon le procédé tel que décrit précédemment, de forme générale incurvée avec au moins un rayon de courbure longitudinal et/ou transversal aux circuits des fluides.

Selon une variante de réalisation avantageuse, les collecteurs d'entrée et de sortie sont agencés selon l'axe longitudinal du module.

Elle concerne également un échangeur de chaleur, comprenant une pluralité de modules d'échangeur de chaleur comme décrit précédemment, agencés selon une surface incurvée de même rayon de courbure que celui des modules, les modules étant reliés fluidiquement entre eux ou non.

L'échangeur comprend une cuve de forme générale cylindrique, à laquelle les modules d'échangeur sont fixés en étant répartis radialement, , avec leurs rayons de courbure interne ou externe épousant le rayon interne ou externe de la cuve.

Avantageusement, les rayons de courbure interne ou externe des modules d'échangeur sont compris entre 0,5 et 2 fois, de préférence entre 0,75 et 1,25 fois le rayon interne de la cuve. Selon un mode de réalisation avantageux, les modules d'échangeur sont fixés à l'intérieur de la cuve avec les collecteurs d'entrée et de sortie de leur deuxième circuit traversant, notamment radialement la cuve, ou non.

L'invention concerne également l'utilisation de l'échangeur de chaleur tel que décrit précédemment, le fluide du premier circuit, en tant que fluide primaire étant de l'eau liquide et le fluide du deuxième circuit, en tant que fluide secondaire, étant de l'eau liquide.

Selon une application privilégiée, le fluide du premier ou du deuxième circuit provient d'un réacteur nucléaire.

L'invention a enfin pour objet un réacteur nucléaire à eau légère (REL), de type SMR comprenant une cuve interne définissant un passage vers le cœur du réacteur et un échangeur de chaleur tel que décrit précédemment, une enceinte étanche étant délimitée par la cuve interne et la cuve à laquelle sont fixés les modules d'échangeur formant la cuve externe, les cuve interne et externe étant agencées concentriquement en formant une couronne cylindrique. Cette enceinte destinée à fonctionner sous pression a pour rôle d'éviter tout risque d'ouverture des modules en cas incidentel et elle peut constituer une barrière de confinement complémentaire. De plus, l'enceinte peut également permettre de jouer le rôle de collecteur de l'un des deux fluides et éviter de disposer des collecteurs pour ce fluide sur chaque module, limitant ainsi les contraintes de dimensionnement. Enfin, leur forme générale cylindrique offre une bonne tenue à la pression.

Avantageusement, le rayon de courbure interne des modules d'échangeurs épouse la cuve interne.

Ainsi, l'invention est essentiellement un procédé de réalisation d'un module d'échangeur de chaleur à au moins deux circuits de fluide qui vise à lui donner une forme finale incurvée avec au moins un rayon de courbure longitudinal et/ou transverse à l'écoulement des fluides. Pour fabriquer les modules l'échangeur incurvés selon l'invention, on fournit tout d'abord des éléments à assembler.

Ces éléments peuvent être :
soit des plaques métalliques/ tôles sur lesquelles les canaux sont obtenus par gravage chimique ou fraisage sur une face principale ou sur les deux, ou par découpe et association avec une tôle pleine, ces tôles sont cintrées avant ou après gravage ;
soit des plaques métalliques/ tôles sur lesquelles les canaux sont obtenus par mise en forme à l'aide de techniques telles que par exemple l'emboutissage, le pliage, l'hydroformage, le formage par explosion, etc., cintrées avant, pendant ou après formage ;
soit des nappes de fluides assemblées par exemple par soudage diffusion, à partir de telles plaques/tôles, et éventuellement cintrées ou calibrées après assemblage ;
soit des éléments contenant des canaux, tels que des morceaux de nappe, des nappes entières ou des ensembles de nappes obtenus par une technique de fabrication directe telle que par exemple la fusion de lit de poudre par laser ou le dépôt de fil fondu, ces éléments étant avantageusement déjà incurvés.

Ces éléments sont ensuite complétés par des plaques métalliques pleines ou d'autres éléments sans canaux, courbes ou non, nécessaires à reconstituer un module ou une ébauche de module par empilement d'éléments et qui permettront notamment de constituer in fine les rives de l'assemblage.

Le cintrage peut être réalisé à l'aide de rouleaux ou par une technique permettant de conformer les plaques ou éléments sur un outil adapté (emboutissage, hydroformage, procédé Guérin tel que décrit sous le lien : https://fr.wikipedia.org/wiki/Proc%C3%A9d%C3%A9_Gu%C3%A9rin), ou encore par cintrage libre, procédé selon lequel la déformation a lieu à l'aide d'un simple poinçon avec l'objet à cintrer posé sur des supports ponctuels.

On pratique le cintrage avant l'assemblage du module car il n'est pas possible sur l'empilement de plaques en raison des risques de déformation irrégulière ou excessive des canaux, en particulier ceux des premières et dernières nappes.

Les éléments sont ensuite empilés et assemblés par pressage à chaud, par exemple par soudage diffusion ou brasage diffusion.

Cependant, l'opération d'assemblage inclut un calibrage de l'empilement destiné à lui donner la courbure voulue.

En effet, si le cintrage initial des éléments permet d'approcher la courbure désirée, il reste insuffisamment précis. La réalisation du calibrage, c'est-à-dire du cintrage final, fait appel à des outillages destinés à s'assurer que la courbure du module assemblé correspond à la valeur désirée et soit maintenue tout au long de l'étape de soudage.

Cela est le cas par exemple, en soudage diffusion uniaxial, où les tas de compression peuvent avoir une courbure adaptée. De même, en soudage diffusion par CIC, on peut prendre l'empilement en sandwich entre des outillages présentant des faces courbes au contact de l'empilement. Tout ou partie de l'outillage peut jouer le rôle du conteneur. L'outillage peut être traité pour faciliter son élimination, par exemple il peut être revêtu d'une couche de matériau anti diffusant comme de l'alumine.

Après assemblage et parachèvement (usinage, élimination du conteneur), les modules incurvés peuvent être intégrés dans l'encombrement annulaire d'une couronne cylindrique formant une enceinte sous pression.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue en perspective et en arraché partiel d'un module d'échangeur de chaleur selon l'état de l'art, réalisé par empilement et assemblage par soudage-diffusion de plaques métalliques.
[Fig 2] la figure 2 est une vue de face d'un module d'échangeur de chaleur selon l'état de l'art, analogue à celui de la figure 1.
[Fig 3] la figure 3 une vue de côté longitudinal du module d'échangeur de chaleur selon la figure 2.
[Fig 4], [Fig 4A] les figures 4 et 4A sont des vues respectivement en perspective et de dessus d'un module d'échangeur de chaleur selon l'état de l'art, selon une première configuration de dimensionnement.
[Fig 5], [Fig 5A] les figures 5 et 5A sont des vues respectivement de côté et de dessus d'un échangeur de chaleur avec cuves cylindriques définissant une couronne cylindrique à l'intérieur de laquelle sont agencés en étant répartis régulièrement radialement une pluralité de modules selon la première configuration de dimensionnement des figures 4 et 4A.
[Fig 6], [Fig 6A] les figures 6 et 6A sont des vues respectivement en perspective et de dessus d'un module d'échangeur de chaleur selon l'état de l'art, selon une deuxième configuration de dimensionnement.
[Fig 7], [Fig 7A] les figures 7 et 7A sont des vues respectivement de côté et de dessus d'un échangeur de chaleur avec cuves cylindriques définissant une couronne cylindrique à l'intérieur de laquelle sont agencés en étant répartis régulièrement radialement une pluralité de modules selon la deuxième configuration de dimensionnement des figures 6 et 6A.
[Fig 8], [Fig 8A] les figures 8 et 8A sont des vues respectivement en perspective et de dessus d'un module d'échangeur de chaleur incurvé conformément à l'invention, selon une troisième configuration de dimensionnement.
[Fig 9], [Fig 9A] les figures 9 et 9A sont des vues respectivement de côté et de dessus d'un échangeur de chaleur avec cuves cylindriques définissant une couronne cylindrique à l'intérieur de laquelle sont agencés en étant répartis régulièrement radialement une pluralité de modules selon la troisième configuration de dimensionnement des figures 8 et 8A.
[Fig 10], [Fig 10A] les figures 10 et 10A sont des vues respectivement en perspective et de dessus d'un module d'échangeur de chaleur incurvé conformément à l'invention, selon une variante de configuration.
[Fig 11] la figure 11 est une vue en perspective d'un échangeur de chaleur avec cuves cylindriques définissant une couronne cylindrique à l'intérieur de laquelle sont agencés en étant répartis régulièrement radialement une pluralité de modules selon la variante configuration des figures 10 et 10A.
[Fig 12] la figure 12 est une vue en coupe longitudinale d'un module d'échangeur de chaleur incurvé mis en œuvre dans la configuration des figures 10 et 10A.

### Description détaillée

Par souci de clarté, les mêmes références désignant les mêmes éléments d'un module d'échangeur selon l'état de l'art et d'un module d'échangeur selon l'invention sont utilisées pour toutes les figures 1 à 12.

On précise que les différents éléments selon l'invention sont représentés uniquement par souci de clarté et qu'ils ne sont pas nécessairement à l'échelle.

Les figures 1 à 3 ont déjà été commentées en préambule. Elles ne seront donc pas détaillées ci-après.

Afin d'optimiser le nombre de modules d'échangeur, l'encombrement dans un réacteur intégré et les tuyauteries (nombre de tuyaux de raccordement et de traversées de l'enceinte étanche), les inventeurs proposent de réaliser des modules d'échangeurs de chaleur 1 de forme incurvée. Le(s) rayon(s) de courbure de tels modules peuvent être longitudinal(ux) et/ou ou transverse aux écoulements des fluides.

Dans les exemples illustrés, le rayon de courbure est longitudinal et identique à celui de la cheminée, à travers laquelle on retrouve le passage vers le cœur d'un réacteur à eau pressurisée de type SMR. Les deux circuits de fluide d'un module d'échangeur sont alimentés par de l'eau liquide sous pression, typiquement autour de 100°C et avec des pressions de l'ordre de la dizaine de bar.

Pour illustrer les avantages d'un module d'échangeur incurvé selon l'invention comparativement à des modules d'échangeurs de forme générale parallélépipédique droite trois configurations d'échangeurs à pluralités de modules sont présentées ci-après. Ces trois configurations répondent à un même cahier des charges pour un réacteur SMR calogène, i.e. de mêmes puissance totale, débits totaux, températures...

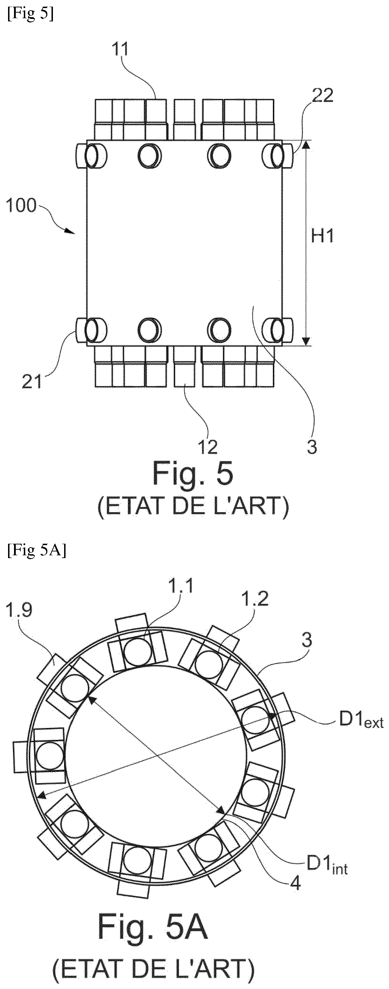

Configuration N°1 (Etat de l'art) : Cette configuration est illustrée aux figures 5 et 5A : elle consiste à dimensionner l'échangeur 100 à partir de neuf modules d'échangeur 1.1 à 1.9 identiques agencés de manière régulière radialement dans une couronne cylindrique d'une enceinte étanche délimitée par une cuve externe 3 de diamètre intérieur D1ext et une cuve interne 4 de diamètre intérieur D1int.

Dans cette configuration N°1, pour chaque module 1.1 à 1.9, les collecteurs d'entrée 11 et de sortie 12 d'un des circuits des fluides sont de forme droite selon l'axe longitudinal des cuves 3, 4, tandis que les collecteurs d'entrée 21 et de sortie 22 débouchent transversalement à l'axe longitudinal (X) du module et traversent la paroi de la cuve externe 4.

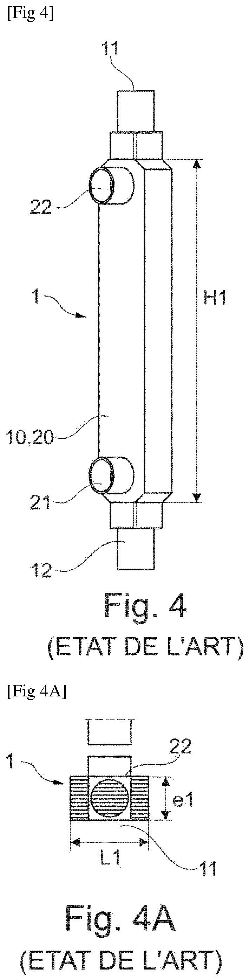

Chacun des neuf modules d'échangeur 1.1 à 1.9 a une forme parallélépipédique droite, de dimensions égales à H1*L1*e1, comme illustré aux figures 4 et 4A.

Cette configuration N°1 permet de convenablement répartir l'encombrement annulaire entre les cuves interne 4 et externe 3 mais elle présente plus de composants à fabriquer, plus de traversées de la cuve externe 3 et plus de raccordements des tuyauteries aux collecteurs 11, 12 ; 21, 22.

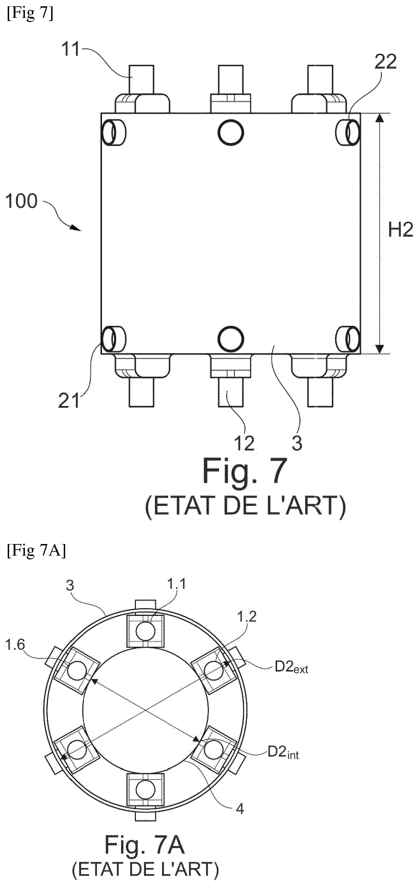

Configuration N°2 (Etat de l'art) : Cette configuration est illustrée aux figures 7 et 7A : elle consiste à dimensionner l'échangeur 100 à partir de six modules d'échangeur 1.1 à 1.6 identiques agencés de manière régulière radialement dans une couronne cylindrique d'une enceinte étanche délimitée par une cuve externe 3 de diamètre intérieur D2ext et une cuve interne 4 de diamètre intérieur D2int.

Dans cette configuration N°2, pour chaque module 1.1 à 1.6, les collecteurs d'entrée 11 et de sortie 12 d'un des circuits des fluides sont de forme droite selon l'axe longitudinal des cuves 3, 4, tandis que les collecteurs d'entrée 21 et de sortie 22 débouchent transversalement à l'axe longitudinal (X) du module et traversent la paroi de la cuve externe 4.

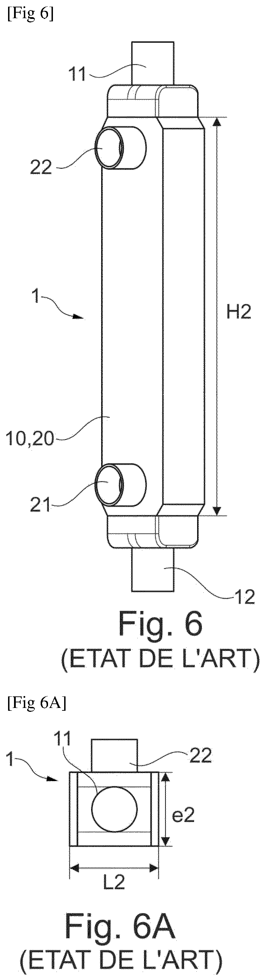

Chacun des six modules d'échangeur 1.1 à 1.6 a une forme parallélépipédique droite, de dimensions égales à H2*L2*e2, comme illustré aux figures 6 et 6A.

Cette configuration N°2 permet d'obtenir moins de composants à fabriquer, moins de traversées de cuve et de tuyauteries de raccordement que la configuration 1, mais elle entraine une augmentation du diamètre de la cuve externe 3. Cela est dû au fait des modules 1.1 à 1.6, qui doivent transmettre chacun plus de puissance que dans la configuration 1 et donc qui ont une épaisseur d'empilement de plaques 10, 20 métalliques qui constituent chaque module, plus importante. De plus, on constate que cette configuration 2 n'est pas la plus optimale quant à l'encombrement annulaire dans la couronne cylindrique 3, 4.

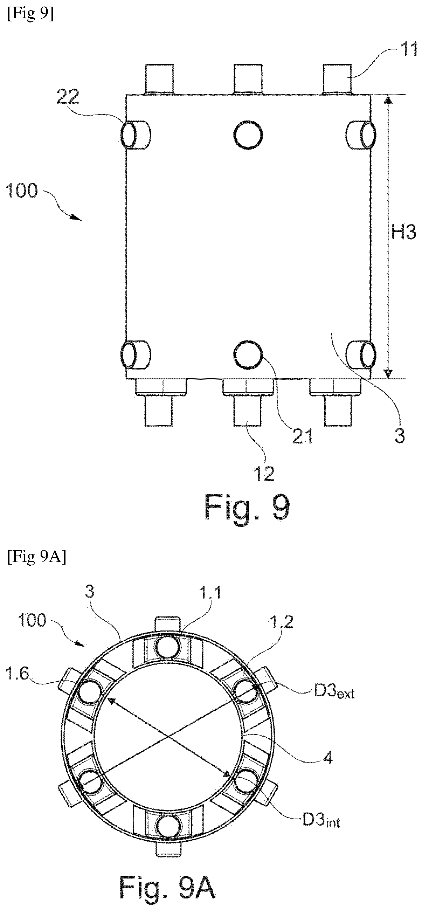

Configuration N°3 (Invention) : Cette configuration est illustrée aux figures 9 et 9A : elle consiste à dimensionner l'échangeur 100 à partir de six modules d'échangeur 1.1 à 1.6 identiques agencés de manière régulière radialement dans une couronne cylindrique d'une enceinte étanche délimitée par une cuve externe 3 de diamètre intérieur D3ext et une cuve interne 4 de diamètre intérieur D3int.

Dans cette configuration N°3, pour chaque module 1.1 à 1.6, les collecteurs d'entrée 11 et de sortie 12 d'un des circuits des fluides sont de forme droite selon l'axe longitudinal des cuves 3, 4, tandis que les collecteurs d'entrée 21 et de sortie 22 débouchent transversalement à l'axe longitudinal (X) du module et traversent la paroi de la cuve externe 4.

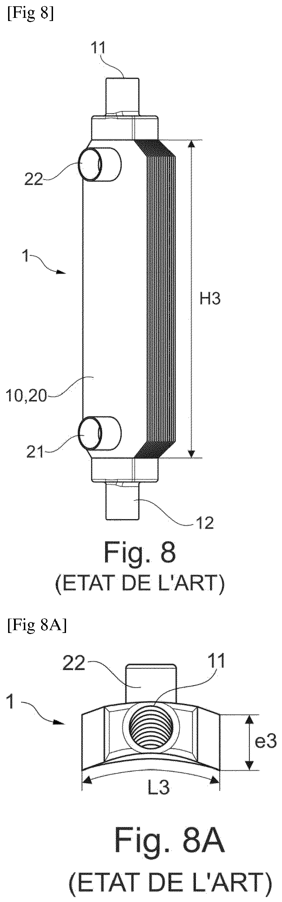

Chacun des six modules d'échangeur 1.1 à 1.6 a une forme générale incurvée dans le sens transversal, i.e. avec un rayon de courbure dans le sens perpendiculaire à l'écoulement des fluides au sein de chaque module, de dimensions égales à H3*L3*e3, comme illustré aux figures 8 et 8A.

Cette configuration N°3 permet d'avoir à la fois les avantages de la configuration N°1 (plus petit diamètre de cuves 3, 4, optimisation de l'encombrement annulaire) et celles de la configuration N°2 (moins de composants à fabriquer, de traversées de cuve et de tuyauterie de raccordement).

On constate donc qu'en adaptant ici la largeur des plaques 10, 20 métalliques qui constituent chaque module, d'une géométrie plane à une géométrique incurvée des modules d'échangeur, on optimise l'échangeur 100 dans la couronne cylindrique 3, 4 autour d'un réacteur intégré de type SMR.

Le tableau 1 ci-dessous donne, à titre indicatif, les valeurs chiffrées des dimensions des modules d'échangeurs et échangeurs dans les différentes configurations présentées ci-avant.

**[Tableau 1]**

| Configuration | N°1 (Etat de l'art) | N°2 (Etat de l'art) | N°3 (Invention) |
|---|---|---|---|
| Dimensions (m) | | | |
| Module d'échangeur 1.1 à 1.9 | H1 = 2,55 | H2 = 2,55 | H3 = 2,55 |
| | L1 = 0,5 | L2= 0,5 | L3 = 0,75 |
| | e1 = 0,28 | e2 = 0,43 | e3 = 0,28 |
| Cuve interne 4 | D1int =1,7 | D2int =1,7 | D3int = 1,7 |
| Cuve externe 3 | D1ext = 2,4 | D2ext = 2,7 | D3ext = 2,4 |

Le rayon de courbure interne d'un module d'échangeur 1.1 à 1.9 est égal à environ 1 m.

On décrit maintenant un exemple de procédé de réalisation d'un module d'échangeur incurvé selon l'invention.

Etape a/: On réalise d'abord des éléments d'un premier et d'un deuxième circuit de fluides, chacun à partir de plaques métalliques 10 ou 20 de formes rectangulaires et d'épaisseur e, identiques entre elles, des rainures 13 ou 23 de profondeur p, de largeur 11 et d'écartement donné s.

On usine deux plaques 10 ou 20 selon deux motifs en image miroir l'un de l'autre.

On peut réaliser des motifs avec des plots dans une partie dans la continuité des rainures, destinée à former un pré-collecteur PC1, PC2, comme décrit dans la demande de brevet déposée en France le 6 mai 2021 sous le n° FR2104813.

A titre d'exemple, les plaques sont en acier inoxydable 1.4404, les dimensions L*1*h d'une plaque I sont égales à 1600*400*4 mm, les dimensions p* 11 des rainures sont égales à 1,5*3 mm avec des tolérances respectivement égales à ± 0,02 mm et ±0,05 mm, la distance s entre deux rainures consécutives, soit la largeur d'un isthme, est égale à 1 mm avec une tolérance égale à ±0,05 mm.

Etape al/: on réalise un nettoyage à l'aide de solvants et détergents des plaques 10 ou 20.

Etape a2/: après les avoir nettoyées, on empile les deux plaques 10 ou 20 de façon à reconstituer un élément du premier circuit ou du deuxième circuit de fluides comportant une série de canaux 14 ou 24 de section égale à 3*3 mm dans l'exemple. Les deux plaques sont alignées l'une par rapport à l'autre grâce à des pions de centrage non représentés.

Etape b/ : on réalise plusieurs nappes intégrant chacune au moins une partie des canaux du premier circuit et/ou du deuxième circuit, par assemblage des éléments des deux circuits de fluide réalisés.

Etape bl/: on rend étanche par soudage la périphérie de chaque élément constitué par les deux plaques métalliques 10 ou 20 empilées l'une sur l'autre en formant les canaux 14 ou 24. Ainsi, un cordon de soudure est réalisé en périphérie de chaque paire de plaques 10 ou 20 de façon à rendre étanche l'espace/interface entre elles.

Etape b2/: on dégaze l'interface entre les deux plaques de chaque élément étanche à travers un orifice débouchant. Pour ce faire, l'espace est mis sous vide par pompage via un queusot soudé sur une des deux plaques 10 ou 20 en regard d'un orifice qui débouche dans cet espace.

Etape b3/: on ferme l'orifice débouchant. Pour ce faire le tube formant le queusot est scellé de façon étanche par écrasement et soudage.

Etape b4/: on soumet un lot de plusieurs éléments identiques à un cycle de CIC dit à basse pression, comprenant un chauffage en 2h à 1020°C sous 60 bar, un palier d'une heure à 1020°C sous 60 bar puis un refroidissement en plusieurs heures et enfin une dépressurisation. Des nappes planes de dimensions 400 x 1600 x 6 mm sont alors obtenues

Etape b5/: Les nappes sont ensuite fraisées pour enlever 1,75 mm d'épaisseur sur chacune de leurs faces principales pour ramener leur épaisseur à 4,5 mm.

Etape c/ : on réalise alors un cintrage initial de chacune des nappes réalisées selon l'étape b/. Ce cintrage initial a lieu sur un rouleau dans la largeur des nappes, c'est-à-dire perpendiculairement au sens d'écoulement des fluides. Dans l'exemple, le rayon de cintrage est de 660 mm, pour obtenir une flèche de 30 mm environ avec les dimensions indiquées ci-avant.

Etape cl/: on réalise un nettoyage à l'aide de solvants et détergents des nappes incurvées.

Etape d/ : on réalise alors un empilement tête-bêche de ces nappes incurvées selon l'étape c/.

Etape e/ : on met ensuite l'empilement de l'étape d/ au sein d'un outillage d'assemblage formant en outre un calibre de courbure, destiné à réaliser un cintrage final.

Etape e1/ : au préalable du cintrage final proprement dit, on ajoute de part et d'autre de l'empilement une plaque métallique pleine d'épaisseur égale à 15 mm, déjà cintrée à un rayon de courbure égal à 660 mm.

Etape e2/ : l'empilement avec les deux plaques pleines cintrées de part et d'autre est placé entre deux blocs d'outillage en acier. Un premier bloc présente une face plane et une face concave et l'autre, une face plane et une face convexe complémentaire à celle concave du premier bloc. Le rayon de courbure des faces convexe/concave complémentaires est égal à 660 mm.

L'ensemble obtenu possède alors une forme extérieure parallélépipédique définie par les bords longitudinaux des nappes et plaques pleines et par les faces planes des deux blocs d'outillage.

Etape e3/ : L'ensemble est inséré dans un conteneur de forme parallélépipédique en tôle pliée et soudée.

Etape e41 : on réalise un soudage et dégazage du conteneur.

Etape f/ : on assemble en appliquant un cycle de CIC, l'empilement au sein de l'outillage selon l'étape e/ de sorte à obtenir l'assemblage définitif avec cintrage final du module d'échangeur de chaleur. Ce cycle CIC, dit haute pression comprend un chauffage en 3 h à 1080°C sous 1000 bar pendant 3 h.

Au cours de ce cycle CIC haute pression, les nappes se soudent entre elles par diffusion.

Le conteneur et les blocs d'outillage sont éliminés. De préférence, pour leur élimination, les outillages sont démoulés. On peut aussi envisager leur élimination par usinage.

Etape g/ : on soude des collecteurs de fluide 11, 12 ou 21, 22 en regard des débouchures de canaux 14 ou 24.

On obtient ainsi un module d'échangeur de chaleur 1 incurvé, prêt à être inséré et fixé dans une enceinte comme celle délimitée par les cuves 3, 4 des figures 9 et 9A.

D'autres variantes et améliorations peuvent être apportées sans pour autant sortir du cadre de l'invention.

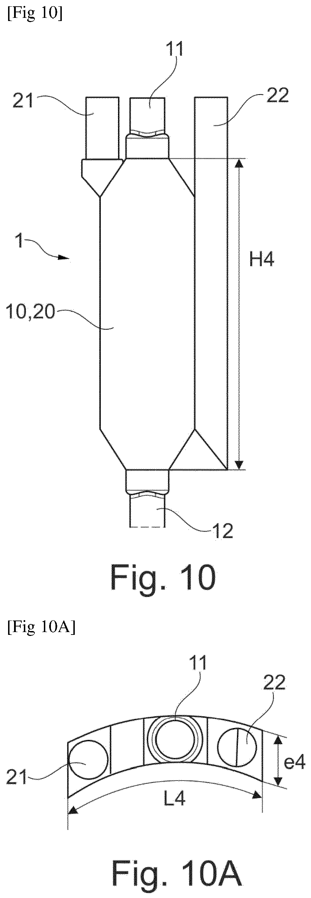

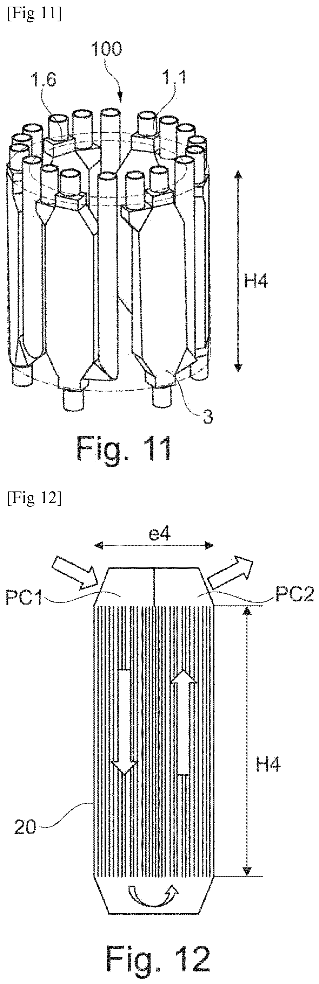

Par exemple, on peut envisager des modules d'échangeur incurvés avec un des circuits de fluide en forme générale de U dont une branche permet une circulation à contre-courant avec le fluide de l'autre circuit et l'autre branche est à co-courant comme cela est montré aux figures 10, 10A et 12 pour un module 1 avec des collecteurs d'entrée 21 et de sortie 22 d'un des deux circuits de part et d'autre du collecteur d'entrée 11 de l'autre des deux circuits.

On peut réaliser en outre des motifs avec des plots dans une partie, dans la continuité des collecteurs 21, 22, destinée à former un pré-collecteur PC1, PC2, comme décrit dans la demande de brevet déposée en France le 6 mai 2021 sous le n° FR2104813.

A titre d'exemple, les dimensions du module 1 sur ces figures 10 et 10A sont les suivantes : H4 = 2,55m, L4 = 1,25 m et e4 = 0,29m.

Comme montré à la figure 11, on peut agencer de tels modules dans un espace entre deux cuves cylindriques 3, 4 avec aucun collecteur 11, 12, 21, 22 qui ne traverser l'une ou l'autre de ces cuves 3, 4 puisqu'il s'étendent dans cet espace selon l'axe longitudinal des modules, parallèlement à l'axe des cuves.

## Revendications

1. Procédé de réalisation d'un module d'échangeur de chaleur (3) à au moins deux circuits de fluide comportant chacun des canaux, comportant les étapes suivantes :
a/ réalisation d'un ou plusieurs éléments (1.1) d'un des deux circuits de fluide, dit premier circuit, et réalisation d'un ou plusieurs éléments d'au moins un autre circuit de fluide, dit deuxième circuit, chaque élément du premier circuit comportant au moins une plaque métallique (1) comportant des premières rainures formant au moins une partie des canaux (4) du premier circuit, chaque élément du deuxième circuit comportant au moins une plaque métallique (1) comportant des deuxièmes rainures (20) formant au moins une partie des canaux (5) du deuxième circuit ;
b/ réalisation d'une ou plusieurs nappes intégrant chacune au moins une partie des canaux du premier circuit et/ou du deuxième circuit, soit par assemblage d'éléments de l'un et/ou l'autre des deux circuits de fluide réalisés selon l'étape a/ et empilés les uns sur les autres, soit par une technique autre que l'assemblage ;
c/ cintrage initial des plaques métalliques des éléments (10, 20) des premier et deuxième circuits sans leurs rainures et/ou lors la réalisation de leurs rainures et/ou une fois leurs rainures réalisées, et/ou de la(des) nappe(s) réalisée(s) selon l'étape b/ le cas échéant empilées entre elles ;
d/ empilement des nappes intégrant chacune au moins une partie des canaux du premier circuit et/ou du deuxième circuit et cintrées initialement; l'empilement intégrant le cas échéant des plaques métalliques pleines, incurvées ou non ;
e/ mise en place de l'empilement de l'étape d/ au sein d'un outillage d'assemblage formant en outre un calibre de courbure, destiné à réaliser un cintrage final ;
f/ assemblage par pressage à chaud de l'empilement au sein de l'outillage selon l'étape e/ de sorte à obtenir l'assemblage définitif avec cintrage final du module d'échangeur de chaleur.

2. Procédé selon la revendication 1, la technique autre que l'assemblage selon l'étape b/ étant une technique de fabrication additive, de préférence choisie parmi la fusion sur lit de poudre métallique au moyen d'un laser ou le dépôt de fil métallique fondu.

3. Procédé selon la revendication 1 ou 2, l'étape b/ et/ou l'étape f/ d'assemblage étant réalisée soit par soudage-diffusion, soit par brasage, soit par brasage-diffusion.

4. Procédé selon la revendication 3, l'étape f/ d'assemblage étant réalisée par application d'un cycle de compression isostatique à chaud (CIC) à haute pression aux nappes et/ou à l'empilement, les canaux à la fois du premier circuit et du deuxième circuit étant ouverts vers l'extérieur.

5. Procédé selon la revendication 4, le cycle de CIC selon l'étape f/ étant réalisé à une température comprise entre 850°C et 1200°C, de préférence entre 1050°C et 1150°C, une pression comprise entre 500 et 1500 bar avec une montée en température d'une durée comprise entre 1h et 4h et un maintien en température d'une durée de 1h à 6h.

6. Procédé selon l'une des revendications 4 ou 5, selon lequel on réalise au préalable de l'étape f/ de CIC, l'étape e/ comprenant :
e1/ un ajout d'au moins une plaque métallique pleine de part et d'autre de l'empilement pour former un pré-module,
e2/ l'insertion du pré-module dans un outillage à deux blocs de forme concave et convexe complémentaires dont le rayon de courbure correspond à celui du cintrage final,
e3/ insertion du pré-module pris entre les deux blocs d'outillage dans un conteneur de forme parallélépipédique en tôle pliée et soudée, puis
e4/ une étape de mise sous vide de l'intérieur du conteneur.

7. Procédé selon l'une des revendications précédentes, comprenant une étape g/ de soudage de tubes de collecteurs de fluide (11, 12 ; 21, 22) sur le module assemblé selon l'étape f/, un collecteur de fluide étant apte à distribuer ou récupérer un fluide circulant dans le premier ou le deuxième circuit.

8. Module (1 ; 1.1 à 1.6) d'échangeur de chaleur à au moins deux circuits de fluides, obtenu selon le procédé selon l'une quelconque des revendications précédentes, de forme générale incurvée avec au moins un rayon de courbure longitudinal et/ou transversal aux circuits des fluides.

9. Module (1 ; 1.1 à 1.6) d'échangeur de chaleur à au moins deux circuits de fluides, selon la revendication 8, les collecteurs d'entrée (11, 21) et de sortie (12, 22) étant agencés selon l'axe longitudinal du module.

10. Echangeur de chaleur, comprenant une pluralité de modules d'échangeur (1.1 à 1.6) de chaleur selon la revendication 8 ou 9, agencés selon une surface incurvée de même rayon de courbure que celui des modules, les modules étant reliés fluidiquement entre eux ou non.

11. Echangeur de chaleur selon la revendication 10, comprenant une cuve de forme générale cylindrique, à laquelle les modules d'échangeur sont fixés en étant répartis radialement, de préférence régulièrement, avec leurs rayons de courbure interne ou externe épousant le rayon interne ou externe de la cuve.

12. Echangeur de chaleur selon la revendication 11, les rayons de courbure interne ou externe des modules d'échangeur étant compris entre 0,5 et 2 fois, de préférence entre 0,75 et 1,25 fois le rayon interne de la cuve.

13. Echangeur de chaleur selon la revendication 12, les modules d'échangeur étant fixés à l'intérieur de la cuve avec les collecteurs d'entrée (11, 21) et de sortie (12, 22) de leur deuxième circuit traversant, notamment radialement, la cuve, ou non.

14. Utilisation de l'échangeur de chaleur selon la revendication 12 ou 13, le fluide du premier circuit, en tant que fluide primaire étant de l'eau liquide et le fluide du deuxième circuit, en tant que fluide secondaire, étant de l'eau liquide.

15. Utilisation selon la revendication 14, le fluide du premier ou du deuxième circuit provenant d'un réacteur nucléaire.

16. Réacteur nucléaire à eau légère (REL), de type SMR comprenant une cuve interne définissant un passage vers le cœur du réacteur et un échangeur de chaleur selon la revendication 13, une enceinte étanche étant délimitée par la cuve interne et la cuve à laquelle sont fixés les modules d'échangeur formant la cuve externe, les cuve interne et externe étant agencées concentriquement en formant une couronne cylindrique.

17. Réacteur nucléaire (REP) selon la revendication 16, dans lequel le rayon de courbure interne des modules d'échangeurs épouse la cuve interne.

## Patentansprüche

1. Verfahren zur Herstellung eines Wärmetauschermoduls (3) mit mindestens zwei Fluidkreisläufen, die jeweils Kanäle umfassen, umfassend die folgenden Schritte:
a/ Herstellen eines oder mehrerer Elemente (1.1) eines der zwei Fluidkreisläufe, als erster Kreislauf bezeichnet, und Herstellen eines oder mehrerer Elemente mindestens eines anderen Fluidkreislaufs, als zweiter Kreislauf bezeichnet, wobei jedes Element des ersten Kreislaufs mindestens eine Metallplatte (1) umfasst, die erste Rillen umfasst, die mindestens einen Teil der Kanäle (4) des ersten Kreislaufs bilden, wobei jedes Element des zweiten Kreislaufs mindestens eine Metallplatte (1) umfasst, die zweite Rillen (20) umfasst, die mindestens einen Teil der Kanäle (5) des zweiten Kreislaufs bilden;
b/ Herstellen einer oder mehrerer Lagen, die jeweils mindestens einen Teil der Kanäle des ersten Kreislaufs und/oder des zweiten Kreislaufs enthalten, entweder durch das Fügen von gemäß Schritt a/ hergestellten und übereinander gestapelten Elementen des einen und/oder des anderen der zwei Fluidkreisläufe oder durch eine andere Technik als das Fügen;
c/ anfängliches Biegen der Metallplatten der Elemente (10, 20) des ersten und des zweiten Kreislaufs ohne ihre Rillen und/oder während der Herstellung ihrer Rillen und/oder nach Herstellung ihrer Rillen und/oder der einen oder der mehreren gemäß Schritt b/ hergestellten Lagen, die gegebenenfalls gestapelt wurden;
d/ Stapeln der anfänglich gebogenen Lagen, die jeweils mindestens einen Teil der Kanäle des ersten Kreislaufs und/oder des zweiten Kreislaufs enthalten; wobei der Stapel gegebenenfalls Massivmetallplatten, die gekrümmt sind oder nicht, enthält;
e/ Einrichten des Stapels aus Schritt d/ innerhalb eines Fügewerkzeugs, das ferner ein Krümmungskaliber bildet und dazu bestimmt ist, ein abschließendes Biegen durchzuführen;
f/ Fügen des Stapels durch Heißpressen innerhalb des Werkzeugs gemäß Schritt e/, um das endgültige Fügen mit abschließendem Biegen des Wärmetauschermoduls zu erhalten.

2. Verfahren nach Anspruch 1, wobei die andere Technik als das Fügen gemäß Schritt b/ eine Technik zur generativen Fertigung ist, die vorzugsweise aus dem Metallpulverbettschmelzen mittels Laser oder dem Auftragen eines geschmolzenen Metalldrahts ausgewählt wird.

3. Verfahren nach Anspruch 1 oder 2, wobei Schritt b/ und/oder Schritt f/ des Fügens entweder durch Diffusionsschweißen oder durch Löten oder durch Diffusionslöten durchgeführt werden.

4. Verfahren nach Anspruch 3, wobei Schritt f/ des Fügens durch das Anwenden eines Zyklus heißisostatischen Pressens (HIP) unter hohem Druck auf die Lagen und/oder den Stapel durchgeführt wird, wobei die Kanäle sowohl des ersten Kreislaufs als auch des zweiten Kreislaufs nach außen hin offen sind.

5. Verfahren nach Anspruch 4, wobei der HIP-Zyklus gemäß Schritt f/ bei einer Temperatur zwischen 850 °C und 1200 °C, vorzugsweise zwischen 1050 °C und 1150 °C, einem Druck zwischen 500 und 1500 bar mit einem Temperaturanstieg über eine Dauer zwischen 1 h und 4 h und einem Halten der Temperatur über eine Dauer von 1 h bis 6 h durchgeführt wird.

6. Verfahren nach einem der Ansprüche 4 oder 5, wobei vor Schritt f/ des HIP der Schritt e/ durchgeführt wird, der Folgendes beinhaltet:
e1/ Hinzufügen mindestens einer Massivmetallplatte auf beiden Seiten des Stapels, um ein Vormodul zu bilden,
e2/ Einsetzen des Vormoduls in ein Werkzeug mit zwei Blöcken konkaver und konvexer Form, die komplementär sind und deren Krümmungsradius dem des abschließenden Biegens entspricht,
e3/ Einsetzen des Vormoduls, das zwischen den zwei Werkzeugblöcken eingeklemmt ist, in ein Behältnis parallelepipedischer Form aus gefalztem und geschweißtem Blech, dann
e4/ einen Schritt des Evakuierens des Innenraums des Behältnisses.

7. Verfahren nach einem der vorhergehenden Ansprüche, beinhaltend einen Schritt g/ des Schweißens von Rohren von Fluidsammlern (11, 12; 21, 22) an das gemäß Schritt f/ gefügte Modul, wobei ein Fluidsammler dazu fähig ist, ein Fluid, das in dem ersten oder dem zweiten Kreislauf zirkuliert, zu verteilen oder zu sammeln.

8. Wärmetauschermodul (1; 1.1 bis 1.6) mit mindestens zwei Fluidkreisläufen, das gemäß dem Verfahren nach einem der vorhergehenden Ansprüche erhalten wird, mit allgemein gekrümmter Form mit mindestens einem Krümmungsradius in Längs- und/oder Querrichtung zu den Fluidkreisläufen.

9. Wärmetauschermodul (1; 1.1 bis 1.6) mit mindestens zwei Fluidkreisläufen nach Anspruch 8, wobei die Eingangssammler (11, 21) und die Ausgangssammler (12, 22) entlang der Längsachse des Moduls angeordnet sind.

10. Wärmetauscher, beinhaltend eine Vielzahl von Wärmetauschermodulen (1.1 bis 1.6) nach Anspruch 8 oder 9, die entlang einer gekrümmten Oberfläche mit dem gleichen Krümmungsradius wie dem der Module angeordnet sind, wobei die Module untereinander fluidisch verbunden sind oder nicht.

11. Wärmetauscher nach Anspruch 10, beinhaltend einen Behälter mit allgemein zylindrischer Form, an dem die Wärmetauschermodule, vorzugsweise regelmäßig, radial verteilt befestigt sind, wobei ihr Innen- oder Außenkrümmungsradius dem Innen- oder Außenradius des Behälters angepasst ist.

12. Wärmetauscher nach Anspruch 11, wobei der Innen- oder Außenkrümmungsradius der Tauschermodule zwischen dem 0,5- und 2-fachen, vorzugweise zwischen dem 0,75- und 1,25-fachen, des Innenradius des Behälters beträgt.

13. Wärmetauscher nach Anspruch 12, wobei die Tauschermodule im Inneren des Behälters befestigt sind und ihre Eingangssammler (11, 21) und Ausgangssammler (12, 22) ihres zweiten Kreislaufs den Behälter, insbesondere radial, durchqueren oder nicht.

14. Verwendung des Wärmetauschers nach Anspruch 12 oder 13, wobei das Fluid des ersten Kreislaufs, als Primärfluid, flüssiges Wasser ist und das Fluid des zweiten Kreislaufs, als Sekundärfluid, flüssiges Wasser ist.

15. Verwendung nach Anspruch 14, wobei das Fluid des ersten oder des zweiten Kreislaufs aus einem Kernreaktor stammt.

16. Leichtwasserkernreaktor (LWR) vom Typ SMR, beinhaltend einen Innenbehälter, der einen Durchgang zu dem Kern des Reaktors definiert, und einen Wärmetauscher nach Anspruch 13, wobei durch den Innenbehälter und den Behälter, an dem die Tauschermodule befestigt sind und der den Außenbehälter bildet, eine dichte Kammer begrenzt wird, wobei der Innen- und der Außenbehälter konzentrisch angeordnet sind und einen zylindrischen Kranz bilden.

17. Kernreaktor (DWR) nach Anspruch 16, wobei der Innenkrümmungsradius der Tauschermodule an den Innenbehälter angepasst ist.

## Claims

1. Method for producing a heat exchanger module (3) having at least two fluid circuits each having channels, involving the following steps:
a/ production of one or more elements (1.1) of one of the two fluid circuits, referred to as the first circuit, and producing one or more elements of at least one other fluid circuit, referred to as the second circuit, each element of the first circuit having at least one metal plate (1) having first grooves forming at least a portion of the channels (4) of the first circuit, each element of the second circuit having at least one metal plate (1) having second grooves (20) forming at least a portion of the channels (5) of the second circuit;
b/ production of one or more layers each incorporating at least a portion of the channels of the first circuit and/or of the second circuit, either by assembly of elements of one and/or the other of the two fluid circuits produced according to step a/ and stacked on one another, or by a technique other than assembly;
c/ initial bending of the metal plates of the elements (10, 20) of the first and second circuits without their grooves and/or during the production of their grooves and/or once their grooves have been produced, and/or of the layer(s) produced according to step b/ if appropriate stacked together;
d/ stacking of the layers each incorporating at least a portion of the channels of the first circuit and/or of the second circuit and initially bent; the stack incorporating, if appropriate, solid metal plates, which may or may not be curved;
e/ putting in place of the stack of step d/ within an assembly tool also forming a curve gauge, intended to carry out a final bending;
f/ assembly by hot pressing of the stack within the tool according to step e/ so as to obtain the definitive assembly with final bending of the heat exchanger module.

2. Method according to Claim 1, the technique other than assembly according to step b/ being an additive manufacturing technique, preferably selected from metal powder bed fusion by means of a laser or molten metal wire deposition.

3. Method according to Claim 1 or 2, step b/ and/or step f/ of assembly being carried out by diffusion welding, by brazing or by diffusion brazing.

4. Method according to Claim 3, step f/ of assembly being carried out by applying a high pressure hot isostatic pressing (HIP) cycle to the layers and/or to the stack, the channels of both the first circuit and the second circuit being open to the outside.

5. Method according to Claim 4, the HIP cycle according to step f/ being carried out at a temperature of between 850°C and 1200°C, preferably between 1050°C and 1150°C, a pressure of between 500 and 1500 bar with a rise in temperature for a time of between 1h and 4h and holding of the temperature for a time of 1h to 6h.

6. Method according to either of Claims 4 and 5, wherein there is performed, before step f/ of HIP, step e/ comprising:
e1/ adding at least one solid metal plate on either side of the stack to form a pre-module,
e2/ inserting the pre-module into a tool having two complementary blocks of concave and convex shape of which the radius of curvature corresponds to that of the final bending,
e3/ inserting the pre-module held between the two tool blocks into a container of parallelepipedal shape made of folded and welded sheet metal, then
e4/ a step of placing the inside of the container under vacuum.

7. Method according to one of the preceding claims, comprising a step g/ of welding fluid manifold tubes (11, 12; 21, 22) to the module assembled according to step f/, a fluid manifold being able to distribute or recover a fluid circulating in the first or second circuit.

8. Heat exchanger module (1; 1.1 to 1.6) having at least two fluid circuits, obtained according to the method according to any one of the preceding claims, of curved overall shape with at least one radius of curvature that is longitudinal and/or transverse with respect to the circuits of the fluids.

9. Heat exchanger module (1; 1.1 to 1.6) having at least two fluid circuits, according to Claim 8, the inlet (11, 21) and outlet (12, 22) manifolds being arranged along the longitudinal axis of the module.

10. Heat exchanger, comprising a plurality of heat exchanger modules (1.1 to 1.6) according to Claim 8 or 9, arranged along a curved surface of the same radius of curvature as that of the modules, the modules being or not being fluidically connected to each other.

11. Heat exchanger according to Claim 10, comprising a vessel of cylindrical overall shape, to which the exchanger modules are fastened, being distributed radially, preferably regularly, with their internal or external radii of curvature matching the internal or external radius of the vessel.

12. Heat exchanger according to Claim 11, the internal or external radii of curvature of the exchanger modules being between 0.5 and 2 times, preferably between 0.75 and 1.25 times, the internal radius of the vessel.

13. Heat exchanger according to Claim 12, the exchanger modules being fastened inside the vessel with the inlet (11, 21) and outlet (12, 22) manifolds of their second circuit passing through, in particular radially, the vessel, or not.

14. Use of the heat exchanger according to Claim 12 or 13, the fluid of the first circuit, as primary fluid, being liquid water and the fluid of the second circuit, as secondary fluid, being liquid water.

15. Use according to Claim 14, the fluid of the first or second circuit originating from a nuclear reactor.

16. Light water nuclear reactor (LWR), of SMR type comprising an internal vessel defining a passage to the core of the reactor and a heat exchanger according to Claim 13, a sealed enclosure being delimited by the internal vessel and the vessel to which are fastened the exchanger modules forming the external vessel, the internal and external vessels being arranged concentrically forming a cylindrical ring.

17. Nuclear reactor (PWR) according to Claim 16, wherein the internal radius of curvature of the exchanger modules matches the internal vessel.
